# EUROPÄISCHE PATENTSCHRIFT

(11) **EP 3 625 378 B1**
(45) Veröffentlichungstag und Bekanntmachung des Hinweises auf die Patenterteilung: **12.07.2023**
(21) Anmeldenummer: 18729862.5
(22) Anmeldetag: 09.05.2018
(51) Int. Cl.: C23C 22/00, C23C 22/73, C23C 22/78, C23C 22/62, C23C 22/07, C23G 3/00, F16C 33/64

(54) **VERFAHREN ZUR OBERFLÄCHENMODIFIKATION MINDESTENS EINES BAUTEILS UND REAKTORVORRICHTUNG ZUR DURCHFÜHRUNG DES VERFAHRENS**
METHOD FOR THE SURFACE MODIFICATION OF AT LEAST ONE COMPONENT AND REACTOR DEVICE FOR CARRYING OUT THE METHOD
PROCÉDÉ POUR LA MODIFICATION DE SURFACE D'AU MOINS UNE PIÈCE ET DISPOSITIF RÉACTEUR POUR LA RÉALISATION DU PROCÉDÉ

(30) Priorität: 17.05.2017 DE 102017110680; 09.06.2017 DE 102017112736
(43) Veröffentlichungstag der Anmeldung: 25.03.2020
(73) Patentinhaber: Schaeffler Technologies AG & Co. KG, 91074 Herzogenaurach (DE)
(72) Erfinder: WELZER, Bernd, 14612 Falkensee (DE); HAAG, Bertram, 91486 Uhlfeld (DE); PODGAYNYY, Nikolay, 91325 Adelsdorf (DE); JAKOB, Christian, 97535 Wasserlosen (DE)
(86) Internationale Anmeldenummer: PCT/DE2018/100446
(87) Internationale Veröffentlichungsnummer: WO 2018/210377

(56) Entgegenhaltungen:
- EP-A2- 2 703 502
- WO-A1-86/06007
- WO-A1-2014/009236
- DE-A1- 1 938 589
- DE-A1-102015 201 791
- GB-A- 1 231 242

## Beschreibung

Die Erfindung betrifft ein Verfahren zur Oberflächenmodifikation mindestens eines Bauteils, wobei die Oberflächenmodifikation in Form einer Brünierung oder einer Phosphatierung erfolgt, wobei eine Konversionsbeschichtung ausgebildet wird.

Verfahren zur Oberflächenbehandlung sind bei der Herstellung von Bauteilen häufig vorgesehen. Oberflächenbehandlungen dienen unter anderem zum Schutz vor Korrosion und erhöhen insbesondere die Lebensdauer der Bauteile. Je nach verwendetem Material kommen hierbei verschiedene Oberflächenbehandlungen zur Anwendung, wie zum Beispiel galvanotechnische, nasschemische oder Verdampfungsbeschichtungen. Oftmals sind die verwendeten Chemikalien umweltgefährdend, weshalb verschiedene Verfahren zur Oberflächenbehandlung in Reaktoren entwickelt und durchgeführt werden.

Die DE 10 2007 061 193 A1 offenbart ein solches Verfahren zur Oberflächenbehandlung eines wälzbeanspruchten Bauteils in Form eines Brünierens.

Die Druckschrift DE 10 2006 034 382 A1 offenbart eine Vorrichtung zur elektrochemischen Beschichtung von Werkstücken, umfassend einen Beschichtungsreaktor, dem ein Elektrolyt zugeführt wird und der eine Beschichtungsblende enthält, in der das zu beschichtende Werkstück aufgenommen ist.

Die nicht vorveröffentlichte Patentanmeldung DE 10 2015 222 902 der Anmelderin offenbart ein Verfahren zur Oberflächenbehandlung eines Bauteils, bei dem eine Vorrichtung umfassend einen Reaktor eingesetzt wird, der mit dem Bauteil bestückt wird. Bei der Oberflächenbehandlung des Bauteils wird der Reaktor nacheinander mit unterschiedlichen Medien befüllt. Dabei hat sich gezeigt, dass dabei eine Verunreinigung der verwendeten einzelnen Medien und eine Verschleppung von Restbeständen eines Mediums in weitere Medien erfolgt, die in den Reaktor eingebracht und wieder ausgebracht werden. Dadurch ist ein bereits frühzeitiger Austausch der Behandlungsmedien erforderlich.

Die DE 19 38 589 A1 offenbart ein Verfahren zum Lackieren von Karosserien mit Vorbehandlung wie Entfetten und Phosphatieren.

Die WO 2014/009236 A1 beschreibt ein Verfahren zur Herstellung eines Wälzlagerbauteils, wobei zumindest auf Abschnitten der Oberfläche des Bauteil eine Eisenoxidschicht ausgebildet wird.

Es ist Aufgabe der vorliegenden Erfindung, ein Verfahren zur Oberflächenmodifikation mindestens eines Bauteils und eine Vorrichtung zur Durchführung des Verfahrens vorzuschlagen, die eine ressourcenschonende Produktion ermöglichen.

Die Aufgabe wird durch ein Verfahren zur Oberflächenmodifikation mindestens eines ringförmigen Bauteils, das einen Durchmesser oder Abmessungen im Bereich von 0,5 m bis 12 m aufweist, gelöst, indem in mindestens einem ersten Reaktor mindestens ein Hauptprozess durchgeführt wird und in mindestens einem zweiten Reaktor mindestens ein Hilfsprozess durchgeführt wird, wobei das mindestens eine ringförmige Bauteil in den mindestens einen, mit mindestens einem Hauptmedium gefüllten ersten Reaktor eingebracht wird, so dass der mindestens eine erste Reaktor mit dem mindestens einen ringförmigen Bauteil bestückt ist, wobei in dem mindestens einen Hauptprozess das mindestens eine ringförmige Bauteil in dem mindestens einen Hauptmedium gebadet wird, wobei durch das mindestens eine Hauptmedium eine chemische Änderung der Oberfläche des mindestens einen ringförmigen Bauteils erfolgt, wobei das mindestens eine ringförmige Bauteil in den mindestens einen, mit mindestens einem Hilfsmedium gefüllten zweiten Reaktor eingebracht wird, so dass der mindestens eine zweite Reaktor mit dem mindestens einen ringförmigen Bauteil bestückt ist, wobei in dem mindestens einen Hilfsprozess das mindestens eine ringförmige Bauteil in dem Hilfsmedium gebadet wird, wobei durch das Hilfsmedium eine Behandlung der Oberfläche des mindestens einen ringförmigen Bauteils erfolgt, wobei Reaktoren eingesetzt werden, die in der Draufsicht einen ringförmigen Querschnitt aufweisen, und wobei die Oberflächenmodifikation in Form einer Brünierung oder einer Phosphatierung erfolgt, wobei eine Konversionsbeschichtung ausgebildet wird.

Besonders bevorzugt werden Bauteile mit einem Durchmesser oder Abmessungen im Bereich von 1,2 m bis 4 m behandelt. Dabei ist bei runden Bauteilen ein minimaler Durchmesser von 0,5 m und ein maximaler Durchmesser von 12 m, insbesondere von 4m vorgesehen. Bei nicht runden Teilen beträgt mindestens eine Abmessung, also eine Längenabmessung und/oder eine Breitenabmessung und/oder eine Tiefenabmessung, minimal 0,5 m und maximal 12m, insbesondere maximal 4m.

Es kann entweder nur ein Bauteil in einem Reaktor behandelt werden oder mehrere Bauteile gleichzeitig behandelt werden. Insbesondere werden gleichzeitig mindestens zwei, insbesondere mindestens drei Bauteile gleichzeitig in einen Reaktor eingebracht und in diesem behandelt. Vorzugsweise werden drei bis zehn Bauteile gleichzeitig in einem Reaktor behandelt.

Die Aufgabe wird weiterhin gelöst durch eine Reaktorvorrichtung zur Durchführung des erfindungsgemäßen Verfahrens, mit mindestens einem beheizten ersten Reaktor, wobei der mindestens eine erste Reaktor mindestens eine Aufnahmeeinrichtung zur Aufnahme des mindestens einen ringförmigen Bauteils aufweist, mit mindestens einem zweiten Reaktor, wobei der mindestens eine zweite Reaktor mindestens eine weitere Aufnahmeeinrichtung zur Aufnahme des mindestens einen ringförmigen Bauteils aufweist, und mit mindestens einer Transporteinrichtung zum Einbringen des mindestens einen ringförmigen Bauteils in einen ersten Reaktor oder einen zweiten Reaktor und/oder zum Entnehmen des mindestens einen ringförmigen Bauteils aus einem ersten Reaktor oder einem zweiten Reaktor, wobei die Reaktoren in der Draufsicht einen ringförmigen Querschnitt aufweisen.

Das erfindungsgemäße Verfahren und die erfindungsgemäße Reaktorvorrichtung ermöglichen eine konsequente Trennung von Hauptmedien und Hilfsmedien durch Verwendung getrennter Reaktoren, so dass eine Verunreinigung eines Hauptmediums durch ein Hilfsmedium oder umgekehrt zuverlässig vermieden werden kann. Dadurch werden eine lange Nutzungsdauer der einzelnen Medien im Verfahren und deren sparsame Verwendung möglich. Wird hier und nachfolgend von einem "Medium" gesprochen, ist ein Hauptmedium und/oder ein Hilfsmedium gemeint.

Unter einer "Aufnahmeeinrichtung" werden hier alle Vorrichtungen verstanden, die geeignet sind, das mindestens eine ringförmige Bauteil in einem Medium über den vorgesehenen Behandlungszeitraum vorzuhalten. So kann es sich bei einer Aufnahmeeinrichtung um eine Ablage handeln, die am jeweiligen Reaktor fest installiert ist oder lediglich in den oder an dem Reaktor zweitweise ein- oder angebracht wird, wie beispielsweise ein separates Ablagegestell oder dergleichen. Weiterhin können derartige Ablagen oder Ablagegestelle mehrere Bauteile gleichzeitig aufnehmen, so dass auch eine gleichzeitige Behandlung mehrerer Bauteile in einem Reaktor erfolgen kann. Weiterhin kann eine Aufnahmeeinrichtung durch einen Kran bereitgestellt sein, der das mindestens eine ringförmige Bauteil, ggf. inklusive eines Ablagegestelles, zur Behandlung in den jeweiligen Reaktor überführt und während der vorgesehenen Behandlungsdauer in dem jeweiligen Reaktor hält.

Gegenüber einem Verfahren, bei dem eine Reaktorvorrichtung verwendet wird, die lediglich einen Reaktor aufweist, der nacheinander mit den unterschiedlichen benötigten Hilfs- und Hauptmedien befüllt wird, weist die erfindungsgemäße Reaktorvorrichtung den Vorteil auf, dass die Prozesszeiten verkürzt werden können und Wärmeverluste an den vorhandenen Reaktoren minimiert werden können. So kühlen die Wandungen eines Reaktors beim Abpumpen eines Mediums in der Regel deutlich ab und müssen durch das neu eingefüllte Medium erst wieder auf Arbeitstemperatur gebracht werden. Dies kostet Zeit und Energie, die bei einer Verwendung mehrerer, in Reihe nebeneinander angeordneter Reaktoren eingespart werden kann.

Der mindestens eine Hilfsprozess ist beispielsweise eine Säuberung der Oberfläche des ringförmigen Bauteils durch Spülen. Insbesondere ist der mindestens eine Hilfsprozess eine Ätzung, eine Aktivierung oder eine Versiegelung der Oberfläche. Die Versiegelung der Oberfläche kann im Speziellen als eine Adsorption an der Oberfläche ausgeführt sein. Der mindestens eine Hilfsprozess kann dem mindestens einen Hauptprozess vor- und/oder nachgelagert sein.

Der mindestens eine erste Reaktor und/oder der mindestens eine zweite Reaktor werden vorzugsweise nach dem Einbringen des mindestens einen ringförmigen Bauteils bis zum Ende einer Behandlungsdauer im jeweiligen Reaktor verschlossen. Dazu wird insbesondere mindestens eine Abdeckung, insbesondere ein Deckel, für den jeweiligen Reaktor vorgesehen. Die Abdeckung ermöglicht einen schnellen Temperaturausgleich zwischen dem Medium im Reaktor und dem mindestens einen ringförmigen Bauteil, ggf. weiterhin auch einem separat eingesetzten Ablagegestell und dergleichen. Weiterhin wird ein Abdampfen des Mediums aus dem jeweiligen Reaktor verhindert und der Wärmeverlust minimiert, so dass eine gegebenenfalls vorhandene Beheizung des Reaktors minimiert werden kann. Alternativ zu einem Verschließen des jeweiligen Reaktors kann auch lediglich eine Haube oder ähnliches vorgesehen sein, die Wärme- und Abdampfverluste vermindert.

Vorzugsweise wird in dem Verfahren das mindestens eine Bauteil folgendermaßen behandelt:
Das mindestens eine ringförmige Bauteil wird zuerst in einen zweiten Hilfsreaktor in Form eines Entfettungsreaktors eingebracht und mittels eines ersten Hilfsmittels entfettet.

Anschließend wird das mindestens eine entfettete Bauteil in einen weiteren zweiten Hilfsreaktor in Form eines Spül- oder Bekeimungsreaktors eingebracht und mittels mindestens eines weiteren Hilfsmittels behandelt, insbesondere gespült oder bekeimt. Dann wird das mindestens eine behandelte Bauteil in einen ersten Reaktor in Form eines ersten Brünier- oder Phosphatierreaktors eingebracht. Dort wird das mindestens eine ringförmige Bauteil in einem ersten Schritt brüniert oder phosphatiert.

Anschließend wird das mindestens eine ringförmige Bauteil optional in einen weiteren ersten Reaktor in Form eines zweiten Brünier- oder Phosphatierreaktors eingebracht. Dort wird die Brünierung oder Phosphatierung des ringförmigen Bauteils in einem zweiten Schritt fortgesetzt und schließlich abgeschlossen.

Es können sich hier weitere Verfahrensschritte in weiteren Hilfsreaktoren zur Nachbehandlung des brünierten oder phosphatierten Bauteils, wie beispielsweise zur Spülung des Bauteils, ggf. auch zur Zwischenspülung zwischen zwei Hauptprozessen, anschließen.

Das mindestens eine weitere Hilfsmedium wird vorzugsweise aus einem externen Behälter in den mindestens einen zweiten Reaktor gefüllt und nach der Behandlung des Bauteils wieder in den externen Behälter zurückgeführt. Dadurch kann der mindestens eine zweite Reaktor mit unterschiedlichen Hilfsmedien befüllt werden, die im Laufe des Verfahren benötigt werden. So kann das mindestens eine ringförmige Bauteil im Laufe des Verfahrens mehrmals in einen, nacheinander mit unterschiedlichen Hilfsmedien befüllten zweiten Reaktor eingebracht werden. Im Anschluss an die Behandlung der Oberfläche des mindestens einen ringförmigen Bauteils mit dem Hilfsmedium kann das Hilfsmedium demnach optional aus dem zweiten Reaktor ausgelassen werden. Optional ergänzend kann das Auslassen des Hilfsmediums durch ein Einpressen von Druckluft unterstützt werden.

Das mindestens eine Hauptmedium wird bevorzugt während des mindestens einen Hauptprozesses erhitzt. Bei Einbringung eines auf Badtemperatur vorgewärmten ringförmigen Bauteils sinkt die Temperatur des Hauptmediums nicht oder nur geringfügig ab, so dass lediglich eine Aufrechterhaltung der Temperatur des Hauptmediums während der Behandlungszeit erforderlich ist. Bei Einbringung mindestens eines nicht vorgewärmten ringförmigen Bauteils sinkt die Temperatur des Hauptmediums dagegen ab, so dass eine Beheizung zur Wiederherstellung der erforderlichen Temperatur des Hauptmediums und eine nachfolgende Aufrechterhaltung der Temperatur des Hauptmediums während der Behandlungszeit erforderlich sind.

Wird das mindestens eine ringförmige Bauteil brüniert, wird bevorzugt im ersten Brünierreaktor als ein erstes Hauptmedium eine wässrige Lösung verwendet, das eine Nitrit-Konzentration von wenigstens 80 g/l aufweist. Das ringförmige Bauteil verbleibt insbesondere für maximal 5 Minuten eingetaucht in das erste Hauptmedium, das eine Temperatur im Bereich von 132 bis 137 °C aufweist. Das Nitrit im ersten Hauptmedium ist bevorzugt in Form von Natriumnitrit vorhanden. Eine Nitrat-Konzentration im ersten Hauptmedium liegt dabei maximal bei einem Viertel der vorhandenen Nitrit-Konzentration.

Im zweiten Brünierreaktor wird als ein zweites Hauptmedium bevorzugt eine weitere wässrige Lösung verwendet, das eine höhere Nitrit-Konzentration als das erste Hauptmedium aufweist. Dabei liegt die Nitrit-Konzentration im zweiten Hauptmedium bevorzugt im Bereich von 140 bis 170 g/l. Das mindestens eine ringförmige Bauteil verbleibt insbesondere für wenigstens 12 Minuten eingetaucht in das zweite Hauptmedium, das eine um 3 bis 5 Kelvin höhere Temperatur aufweist als das erste Hilfsmedium. Das Nitrit im zweiten Hauptmedium ist bevorzugt ebenfalls in Form von Natriumnitrit vorhanden.

Beim Phosphatieren wird durch chemische Reaktionen der metallischen Oberfläche des jeweiligen ringförmigen Bauteils mit wässrigen Phosphatlösungen eine Konversionsschicht bestehend aus fest haftenden Metallphosphatverbindungen gebildet, welche die Reibungs- und Verschleißeigenschaften des Bauteils insgesamt deutlich verbessern.

Die durch das Phosphatieren gebildete Schicht ist beispielsweise eine Manganphosphatschicht, eine Zink-Phosphatschicht, eine Zink-Kalzium-Phosphatschicht oder Eisenphosphatschicht.

Dem Fachmann ist in diesem Zusammenhang bekannt, dass durch Vorbehandlungen oder mechanische Einflüße in vielfältiger Weise auf die Bildung der Phosphatschicht eingewirkt werden kann. So ist es beispielsweise bekannt, dass ein Schleifen oder Strahlen mit Sand- oder Stahlkorn ideale Vorbedingungen für das Aufwachsen der Schicht schaffen. Die Oberfläche ist in diesem Fall mit einer Vielzahl aktiver Zentren bedeckt, so dass ein eine Schichtbildung einleitender Beizangriff und das Aufwachsen des Überzuges sehr gleichmäßig erfolgen. Durch die Anwendung von Säuren wie Salzsaure, Schwefelsaure oder Phosphorsäure wird die Zahl der auf der Metalloberfläche für den Schichtaufbau vorhandenen Kristallisationskeime verringert, so dass nach diesen Behandlungen grobkristalline, dicke Überzüge entstehen. Im Allgemeinen beginnt bei einer Metalloberfläche mit vielen Keimen die Kristallisation an vielen Stellen gleichzeitig, so dass sich die Phosphatkristalle nach kurzer Zeit auf der Oberfläche vereinen. Die Dicke der Schicht, ihre Rauhigkeit und ihre Zeit bis zu ihrer vollständigen Ausbildung bleiben gering. Bei Metalloberflächen mit wenigen Kristallisationskeimen ergibt sich eine dicke, grobkristalline Schicht, wobei die Zeit bis Zur vollständigen Ausbildung wesentlich länger ist. Dem Fachmann ist auch bekannt, dass sich eine Phosphatschicht durch ein spezielles Vorspülen beeinflussen läßt. Durch kurzzeitige Berührung der Metalloberflächen mit Vorspüllösungen werden die schichtvergrößernden und schichtverdickenden Effekte eines Beizens in Säuren wieder aufgehoben. Es entstehen wieder dünne, feinkristalline Schichten, wobei gleichzeitig zumindest die Phosphatierzeit abnimmt. Ähnlich wie diese aktivierenden Vorspülungen wirkt ein Abbürsten oder Abreiben der Metalloberfläche vor dem Phosphatieren. In diesem Fall werden wieder besonders dünne, feinkristalline Schichten erzeugt. Ein anderes bekanntes mechanisches Mittel zur Beeinflussung der Schichtausbildung besteht in der Art, wie die Metalloberfläche mit der Phosphatierlösung in Berührung gebracht wird. Im Allgemeinen nimmt die Dicke des gebildeten Überzugs mit zunehmender Relativgeschwindigkeit zwischen Metalloberfläche und Phosphatierungslösung ab.

Beispielsweise kann eine Phosphatierung in einem Zinkphosphatierbad als Hauptmedium mit den üblichen Gehalten an Phosphorsäure, Zinkoxid, Natriumnitrat, Eisen, Nickel, Oxalaten und organischem Beschleuniger auf Basis Nitrobenzolsulfonsäure erfolgen.

Das mindestens eine ringförmige Bauteil wird demnach beim Brünieren oder Phosphatieren in dem mindestens einen Hauptmedium gebadet. Der Kontakt der Oberfläche des mindestens einen ringförmigen Bauteils mit dem jeweiligen Hauptmedium führt zu einer chemischen Reaktion mit den oberen Schichten des ringförmigen Bauteils. Vorzugsweise weisen die oberen Schichten eine Schichtdicke bis etwa 2 µm auf.

Im Rahmen der Erfindung wird ein Verfahren zur Oberflächenmodifikation mindestens eines ringförmigen Bauteils, insbesondere mindestens eines ringförmigen Bauteils aus Eisen oder einem Stahl, insbesondere aus nicht rostfreiem Stahl, vorgeschlagen.

Insbesondere wird als ringförmiges Bauteil eine Komponente eines Wälzlagers, insbesondere in Form eines Lagerringes, behandelt. Dabei kann es sich um einen

Außenring oder einen Innenring handeln. Aber auch Wälzkörper oder Käfige können einer Oberflächenmodifikation unterzogen werden. Weiterhin können auch andere ringförmige große Teile behandelt werden, wie Getriebeteile, Achsen, Zahnräder und dergleichen.

Vorzugsweise ist das mindestens eine ringförmige Bauteil als eine Komponente eines Großwälzlagers ausgebildet. Die Komponenten des Wälzlagers können aus eisenhaltigen, nicht rostfreien Werkstoffen gefertigt werden und durch eine Oberflächenmodifikation in Form einer Brünierung oder Phosphatierung vor Korrosion geschützt werden.

Vorzugsweise ist das mindestens eine ringförmige Bauteil, insbesondere die Komponente des Großwälzlagers, ein Präzisionsbauteil. Speziell durch eine Brünierung werden die Abmessungen des Präzisionsbauteils nur vernachlässigbar verändert. Alternativ ist das ringförmige Bauteil als ein beliebiges großdimensioniertes Präzisionsbauteil ausgebildet.

Das mindestens eine ringförmige Bauteil wird für die Oberflächenmodifikation in einen der Reaktoren eingebracht. Insbesondere wird das ringförmige Bauteil dabei in dem Reaktor befestigt und/oder in dem Reaktor gehalten oder abgelegt. Dabei werden ringförmige Bauteile bevorzugt liegend in den Reaktor eingebracht, wobei mindestens ein solches Bauteil wie ein Lagerring horizontal in mindestens einem, vorzugsweise in jedem der vorhandenen Reaktoren angeordnet wird.

Wie oben bereits ausgeführt, weist ein jeder Reaktor eine Aufnahmeeinrichtung für das ringförmige Bauteil auf. Die Aufnahmeeinrichtung kann beispielsweise als eine Auflage für das ringförmige Bauteil ausgebildet sein, auf die das ringförmige Bauteil aufgelegt wird. Alternativ kann die Aufnahmeeinrichtung als Klammer ausgebildet sein, wobei die Klammer das ringförmige Bauteil befestigt, insbesondere greift. Die Anordnung im Reaktor erfolgt dabei bevorzugt mittels einer Aufnahmeeinrichtung, die unbeweglich im Reaktor angeordnet ist oder beweglich ausgebildet ist. Eine bewegliche Aufnahmeeinrichtung dient somit der Aufnahme des mindestens einen ringförmigen Bauteils und weiterhin der Bewegung des mindestens einen ringförmigen Bauteils in dem jeweiligen Medium, insbesondere während der Behandlungsdauer.

Das Hilfsmedium ist vorzugsweise als ein Reinigungsmittel, insbesondere zum Entfetten und/oder Reinigen der Oberfläche des ringförmigen Bauteils, ausgebildet. Im Speziellen ist das Hilfsmedium als ein ätzendes Reinigungsmittel ausgebildet. Das Hilfsmedium kann weiterhin als ein Aktivierungsmittel ausgebildet sein. Insbesondere aktiviert das Aktivierungsmittel die Oberfläche des jeweiligen Bauteils, wobei durch die Aktivierung die Oberfläche auf die chemische Reaktion im mindestens einen Hauptprozess vorbereitet wird. Im Speziellen führt die Aktivierung der Oberfläche zu einer Beschleunigung der Reaktionsgeschwindigkeit der im mindestens einen Hauptprozess durchgeführten Reaktion, beispielsweise durch katalytische Wirkung, insbesondere durch eine mittels Aufrauens vergrößerte Oberflächenstruktur. Alternativ kann das Hilfsmedium als ein Konditionierungsmittel ausgebildet werden. Das Hilfsmedium kann auch zum Bekeimen der Oberfläche des mindestens einen Bauteils eingesetzt werden. Insbesondere konditioniert das Konditionierungsmittel die Oberfläche des mindestens einen Bauteils, wobei durch die Konditionierung vorzugsweise Konkurrenzreaktionen, im Speziellen unerwünschte Nebenreaktionen und/oder Alternativreaktionen, unterdrückt werden.

Das Hilfsmedium kann weiterhin als ein Öl ausgebildet sein. Insbesondere versiegelt das Öl die im mindestens einen Hauptprozess veränderten oberen Schichten des mindestens einen ringförmigen Bauteils. Alternativ und/oder ergänzend ist das Öl als ein Entwässerungsöl ausgebildet, wobei das Entwässerungsöl Wasserreste durch vorher verwendete wasserhaltige Hauptmedien und/oder Hilfsmedien von der Oberfläche des mindestens einen ringförmigen Bauteils entfernt.

Ein Phosphatieren startet dabei insbesondere mit einem Entfetten des mindestens einen ringförmigen Bauteils, gefolgt von einer Bekeimung der entfetteten Oberfläche des mindestens einen Bauteils mit Kristallisationskeimen, beispielsweise mit Nickel-Kristallisationskeimen, wobei eine Nickel-Salzlösung als Hilfsmedium eingesetzt wird. Daran schließt sich die Phosphatierung an, beispielsweise eine Manganphosphatierung oder Zinkphosphatierung. Schließlich wird das mindestens eine phosphatierte Bauteil gespült.

Im Rahmen der Erfindung wird die Oberflächenmodifikation als eine Konversionsbeschichtung, nämlich als eine Brünierung oder als eine Phosphatierung ausgebildet. Weiterhin ist das Hauptmedium als ein Brüniermittel oder als ein Phosphatierungsmittel ausgebildet. Insbesondere ist die Reaktion eine Redoxreaktion, im Speziellen wird die Oberfläche des mindestens einen ringförmigen Bauteils oxidiert.

Vorzugsweise wird das Eisen im Werkstoff des mindestens einen ringförmigen Bauteils an der Oberfläche des ringförmigen Bauteils oxidiert. Insbesondere bilden sich beim Brünieren mit dem Eisen Mischoxidschichten aus zweiwertigem und dreiwertigem Eisen, sogenannter Edelrost, wobei der Edelrost einen Schutz vor Korrosion der darunter liegenden Schichten bietet.

In einer bevorzugten Weiterentwicklung der Erfindung ist das Hauptmedium als eine Säure oder eine Lauge ausgebildet. Insbesondere ist das Hauptmedium als eine saure oder alkalische Lösung ausgebildet. Optional ist das Hauptmedium eine Salzschmelze, insbesondere eines niedrigschmelzenden Salzes oder Salzgemisches.

Die Brünierung bzw. die Phosphatierung erfolgt gemäß der erfindungsgemäßen Reaktorvorrichtung mit Hilfe mehrerer Reaktoren, wobei das mindestens eine ringförmige Bauteil mittels mindestens einer Transporteinrichtung, wie beispielsweise über einen Kran, in ein Hauptmedium und/oder ein Hilfsmedium eingebracht und nach der Behandlung wieder herausgehoben wird. Der Kran kann das mindestens eine ringförmige Bauteil auch während der Behandlungsdauer im Reaktor halten.

Das Hauptmedium im beheizten ersten Reaktor wird während des mindestens einen Hauptprozesses beheizt. Insbesondere wird das Hauptmedium im bestückten ersten Reaktor und/oder während des mindestens einen Hauptprozesses auf Siedetemperatur erhitzt und gehalten.

Ein mit Hilfsmedium befüllter zweiter Reaktor kann ebenfalls beheizbar ausgebildet sein, so dass ein Hilfsmedium darin beheizt werden kann. Das Hilfsmedium kann vor dem Einfüllen in einen zweiten Reaktor vorgewärmt werden, insbesondere auf Siedetemperatur erhitzt werden, um nach dem Befüllen des zweiten Reaktors damit eine möglichst schnelle Erreichung seiner Betriebstemperatur sicherzustellen.

Ein Reaktor ist in der Draufsicht vorzugsweise als ein rechteckiger oder zylindrischer Behälter ausgebildet. Bei dem ringförmigen Bauteil wird erfindungsgemäß eine Reaktorform eingesetzt, die in der Draufsicht einen ringförmigen Querschnitt aufweist. Dadurch kann eine mengenmäßige Einsparung an erforderlichen Medien erfolgen, die zur Behandlung des ringförmigen Bauteils eingesetzt werden.

Die Reaktorvorrichtung weist demnach bevorzugt mehrere erste Reaktoren und mehrere zweite Reaktoren auf. Bevorzugt sind zwei erste Reaktoren und zwei zweite Reaktoren vorhanden. Bevorzugt ist dabei mindestens einer der zweiten Reaktoren beheizt.

Die Reaktorvorrichtung weist insbesondere weiterhin eine Anzahl n an externen Behältern zur Vorhaltung des mindestens einen Hauptmediums und des mindestens einen Hilfsmediums auf, wobei mindestens eine Anzahl m an Reaktoren vorhanden ist, wobei n ≥ m gilt.

In einer bevorzugten Weiterentwicklung der Erfindung wird ein Hilfsmedium aus einem solchen externen Behälter in einen der Reaktoren gefüllt, insbesondere gepumpt. Nach beendeter Behandlung wird das Hilfsmedium aus dem Reaktor ausgelassen und in den externen Behälter zurückgeführt und/oder gepumpt. Dies erfolgt beispielsweise über Rohrleitungen oder Schläuche.

Demnach hat es sich weiterhin bewährt, wenn ein derartiger externer Behälter beheizbar ausgeführt ist.

So können beispielsweise nacheinander unterschiedliche Hauptmedien in einen ersten Reaktor und/oder nacheinander unterschiedliche Hilfsmedien in einen zweiten Reaktor eingebracht werden, insbesondere während das damit zu behandelnde mindestens eine ringförmige Bauteil im Reaktor verbleibt.

Die Reaktorvorrichtung weist bevorzugt weiterhin mindestens eine Fördereinrichtung zum Transfer mindestens eines Hilfsmediums von einem der externen Behälter in einen zweiten Reaktor auf. Die Fördereinrichtung weist hierfür Kopplungselemente auf, vorzugsweise Rohrleitungen oder Schläuche, wobei das Medium durch die Kopplungselemente von dem externen Behälter zum Reaktor und umgekehrt fließt. Insbesondere weist die Fördereinrichtung mindestens eine Pumpe auf, wobei die mindestens eine Pumpe das Medium pumpt. Optional weist die Fördereinrichtung ein Rohrleitungssystem mit einem Verteiler auf, wobei der Verteiler das benötigte Medium transferiert.

Die externen Behälter sind bevorzugt in einer erhöhten Position gegenüber den Reaktoren angeordnet, so dass ein Transfer eines Mediums in Richtung eines Reaktors lediglich durch die Schwerkraft bewirkt wird. Sofern ein Reaktor auf einer Hebebühne angeordnet ist, die den Reaktor in eine Position oberhalb der mindestens zwei externen Behälter heben kann, kann auch der Rückfluss des Mediums in den externen Behälter mittels Schwerkraft erfolgen. Somit kann das Medium auch ohne eine Pumpe von dem einen externen Behälter zu einem Reaktor, insbesondere auch von einem Reaktor zu einem externen Behälter, transferiert werden.

Das Medium kann beim Auslassen aus einem Reaktor und/oder während einer Rückführung in einen externen Behälter gefiltert werden. Hierbei wird ein Filter verwendet, um insbesondere eine Verschmutzung des im externen Behälter verbliebenen Mediums zu verhindern. Hierdurch kann das Medium für mehrere Oberflächenmodifikationen wiederverwendet werden, wodurch der Verbrauch des Mediums und damit die Prozesskosten verringert werden.

Im Bereich eines externen Behälters kann weiterhin eine Reinigung des jeweiligen Mediums erfolgen, indem ein Reinigungskreislauf an den externen Behälter angeschlossen ist. Eine derartige Reinigung wird bevorzugt an Spülmedien, wie Wasser, durchgeführt.

Die Reaktorvorrichtung weist bevorzugt mindestens zwei externe Behälter auf, wobei die mindestens zwei externen Behälter zumindest ein Hauptmedium und ein Hilfsmedium aufnehmen.

Ein externer Behälter weist vorzugsweise Vorheizelemente zum Vorheizen des darin gespeicherten Mediums auf. Der externe Behälter ist dabei insbesondere verschließbar und thermisch isoliert ausgebildet, um das Beheizen des Mediums zu beschleunigen und einen Wärmeverlust an die Umgebung zu minimieren.

Der Druck in einem Reaktor wird zumindest während des mindestens einen Hauptprozesses und/oder des mindestens einen Hilfsprozesses konstant gehalten. Der Reaktor weist dazu bevorzugt ein Überdruckventil auf, wobei das Überdruckventil insbesondere beim Erhitzen des Hauptmediums und/oder des Hilfsmediums für einen Ausgleich des ansteigenden Drucks im abgedeckten Reaktor sorgt. Weiterführend kann das Überdruckventil genutzt werden, um ein Aus- oder Ablassen von Medium aus einem Reaktor zu unterstützen.

Ergänzend ist das Überdruckventil vorzugsweise mit einem Luftwäscher gekoppelt, wobei der Luftwäscher den Abdampf eines Reaktors reinigt. Das daraus abgeschiedene Medium kann über Rohr- oder Schlauchleitungen in einen externen Behälter zurückgeführt werden. Hierdurch werden der Verlust des Mediums und ein Austritt in die Umgebung verringert, was gesundheits- und umweltschonend ist.

In einer weiterführenden Ausgestaltung der Erfindung wird das Medium im Reaktor bevorzugt durch mindestens eine Rührvorrichtung bewegt. Besonders bevorzugt wird hierbei eine gerichtete Strömung im Medium erzeugt. Dadurch ergibt sich eine gleichmäßige Durchmischung des Mediums und eine gleichmäßige Anströmung des mindestens einen ringförmigen Bauteils. Insbesondere erfolgt durch das Bewegen des Mediums weiterhin eine gleichmäßige Erhitzung des Mediums. Im Speziellen verhindert das Bewegen eine Phasenbildung beispielsweise durch eine Veränderung des Hauptmediums nahe der Oberfläche des mindestens einen ringförmigen Bauteils durch die Redoxreaktion der Oberfläche des ringförmigen Bauteils. Als Rührvorrichtungen können mechanische Rührer und/oder Düsenanordnungen eingesetzt werden, wobei über die Düsenanordnungen bevorzugt das jeweilige Medium in den bereits mit Medium gefüllten Reaktor eingeströmt wird. Alternativ können aber auch Gase, insbesondere Inertgas, eingedüst werden.

Weitere Merkmale, Vorteile und Wirkungen des erfindungsgemäßen Verfahrens und der erfindungsgemäßen Reaktorvorrichtung ergeben sich aus der nachfolgenden Beschreibung bevorzugter Ausführungsbeispiele der Erfindung, sowie der beigefügten Figuren. Dabei zeigt:
- Figur 1: eine schematische Darstellung einer ersten Reaktorvorrichtung in einer Schnittdarstellung in der Seitenansicht,
- Figur 2: eine zweite schematische Darstellung der ersten Reaktorvorrichtung in einer Schnittdarstellung in der Seitenansicht, ,
- Figur 3: eine dritte schematische Darstellung der ersten Reaktorvorrichtung in einer Schnittdarstellung in der Seitenansicht,
- Figur 4: eine vierte schematische Darstellung der ersten Reaktorvorrichtung in einer Schnittdarstellung in der Seitenansicht,
- Figur 5: eine schematische Darstellung einer zweiten Reaktorvorrichtung in einer Schnittdarstellung in der Seitenansicht, und
- Figur 6: eine mögliche Prozesskette eines Verfahrens.

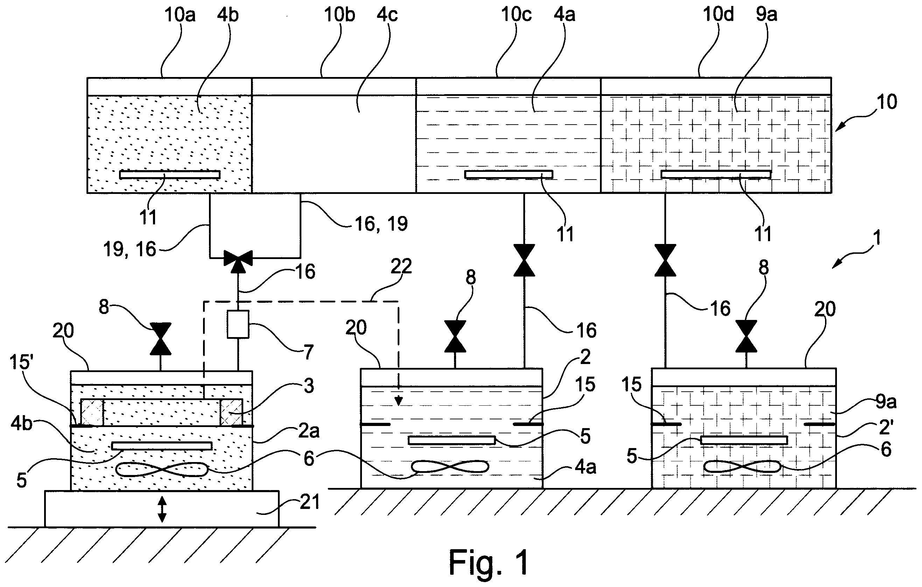

Die Figur 1 zeigt eine schematische Darstellung einer ersten Reaktörvorrichtung 1 in einer Schnittdarstellung in der Seitenansicht. Die erste Reaktorvorrichtung 1 weist einen ersten Reaktor 2 und einen weiteren ersten Reaktor 2' auf, wobei in jedem der ersten Reaktoren 2, 2' ein Hauptprozess durchgeführt wird. Der erste Reaktor 2 ist mit einem ersten Hauptmedium 4a befüllt und mittels eines Heizelements 5 beheizt. Der weitere erste Reaktor 2' ist mit einem zweiten Hauptmedium 9a befüllt und ebenfalls mit einem Heizelement 5 beheizt

Die erste Reaktorvorrichtung 1 weist weiterhin einen zweiten Reaktor 2a auf, in welchem Hilfsprozesse durchgeführt werden. Der zweite Reaktor 2a ist auf einer Hebebühne 21 angeordnet, welche eingerichtet ist, den Reaktor 2a anzuheben und wieder abzusenken. Der zweite Reaktor 2a ist mit einem ersten Hilfsmedium 4b befüllt und mittels eines Heizelements 5 beheizt.

In einer gegenüber den Reaktoren 2, 2', 2a erhöhten Position ist eine Behälteranordnung 10 vorgesehen, welche vier externe Behälter 10a, 10b, 10c, 10d umfasst. Der externe Behälter 10a ist mit einem Vorheizelement 11 versehen und beinhaltet das erste Hilfsmedium 4b. Der externe Behälter 10b ist ohne ein Vorheizelement vorgesehen und beinhaltet das zweite Hilfsmedium 4c. Der externe Behälter 10c ist mit einem Vorheizelement 11 versehen und beinhaltet das erste Hauptmedium 4a. Der externe Behälter 10d ist ebenfalls mit einem Vorheizelement 11 versehen und beinhaltet das erste Hauptmedium 9a.

Jeder Reaktor ist mittels eines Deckels 20 an seiner Oberseite verschlossen, wobei am Deckel 20 jeweils ein Überdruckventil 8 vorgesehen ist. Weiterhin ist in jedem Reaktor eine Rührvorrichtung 6 vorgesehen, um das darin enthaltene Medium umzuwälzen.

Der zweite Reaktor 2a ist über eine Zuführleitung 16 bzw. eine Auslassleitung 19 sowohl mit dem ersten externen Behälter 10a zur Zu- und Abführung von erstem Hilfsmedium 4b als auch dem zweiten externen Behälter 10b zur Zu- und Abführung von zweitem Hilfsmedium 4c verbunden. Weiterhin ist ein Filter 7 vorhanden, der Verunreinigungen aus den Hilfsmedien 4b, 4c herausfiltert. Gemäß Figur 1 wurde der zweite Reaktor 2a mit dem ersten Hilfsmedium 4b befüllt, das der Schwerkraft folgend nach Öffnen des vorgesehenen Ventils in den zweiten Reaktor 2a fließt.

Der erste Reaktor 2 ist über eine weitere Zuführleitung 16 mit dem externen Behälter 10c verbunden. Das erste Hauptmedium 4a kann nach Öffnen des vorgesehenen Ventils in den ersten Reaktor 2 nachgeführt werden.

Auch der weitere erste Reaktor 2' ist über eine weitere Zuführleitung 16 mit dem externen Behälter 10d verbunden. Das zweite Hauptmedium 9a kann nach Öffnen des vorgesehenen Ventils in den weiteren ersten Reaktor 2' nachgeführt werden.

Die Grundform eines jeden Reaktors 2, 2', 2a ist hier eine Zylinderform.

Jedoch kann ein Reaktor 2, 2', 2a in einer nicht dargestellten Ausführungsform auch einen zylinderförmigen Abschnitt und einen kegelförmigen Abschnitt aufweisen, wobei der zylinderförmige Abschnitt nach unten geöffnet ist und in den kegelförmigen Abschnitt übergeht. Die Spitze des kegelförmigen Abschnitts ist dabei nach unten ausgerichtet und weist Eigenschaften eines Trichters auf. Der zylinderförmige Abschnitt weist dabei insbesondere einen größeren Radius als die Höhe des zylinderförmigen Abschnitts auf. Der kegelförmige Abschnitt weist den gleichen Radius wie der zylinderförmige Abschnitt auf. Die Höhe des kegelförmigen Abschnitts ist kleiner als die Höhe des zylinderförmigen Abschnitts. Insbesondere ist die Höhe des kegelförmigen Abschnitts mehr als halb so groß, wie die Höhe des zylinderförmigen Abschnitts.

Ein jeder Reaktor 2, 2', 2a weist eine Aufnahmeeinrichtung 15, 15' für ein ringförmiges Bauteil 3 auf. Die Aufnahmeeinrichtungen 15, 15' für das ringförmige Bauteil 3 sind allerdings lediglich schematisch dargestellt und können auch in anderer Weise realisiert sein.

Die Anordnung eines Heizelements 5 oder eines Vorheizelements 11 ist in sämtlichen Figuren lediglich schematisch dargestellt. So können pro Reaktor bzw. externem Behälter 10a - 10d mehrere Heizelemente 5 bzw. Vorheizelemente 11 vorgesehen sein. Beispielsweise können pro Reaktor zwei ringförmige Heizelemente vorgesehen sein, wobei eines innerhalb und eines außerhalb des horizontal im Reaktor angeordneten, ringförmigen Bauteils 3 angeordnet sein kann.

Das ringförmige Bauteil 3 - im Schnitt dargestellt - ist gemäß Figur 1 im zweiten Reaktor 2a innerhalb des ersten Hilfsmediums 4b angeordnet. Das erste Hilfsmedium 4b dient hier der Entfettung des ringförmigen Bauteils 3. Das ringförmige Bauteil 3 ist hier als ein ringförmiges Werkstück ausgebildet, insbesondere als eine Komponente eines Wälzlagers, wie ein Lagerring.

Der zweite Reaktor 2a ist mit dem ersten Hilfsmedium 4b derart gefüllt, dass das erste Hilfsmedium 4b das ringförmige Bauteil 3 vollständig bedeckt. Nach einer Entfettung des ringförmigen Bauteils 3 im zweiten Reaktor 2a erfolgt ein Transport des entfetteten Bauteils 3 mittels einer lediglich schematisch angedeuteten Transporteinrichtung 22 aus dem zweiten Reaktor 2a heraus und in den beheizten ersten Reaktor 2 hinein. Vor dem Einbringen des entfetteten Bauteils 3 in den ersten Reaktor 2 wird dieses bevorzugt in etwa auf die Temperatur des ersten Hauptmediums 4a erwärmt.

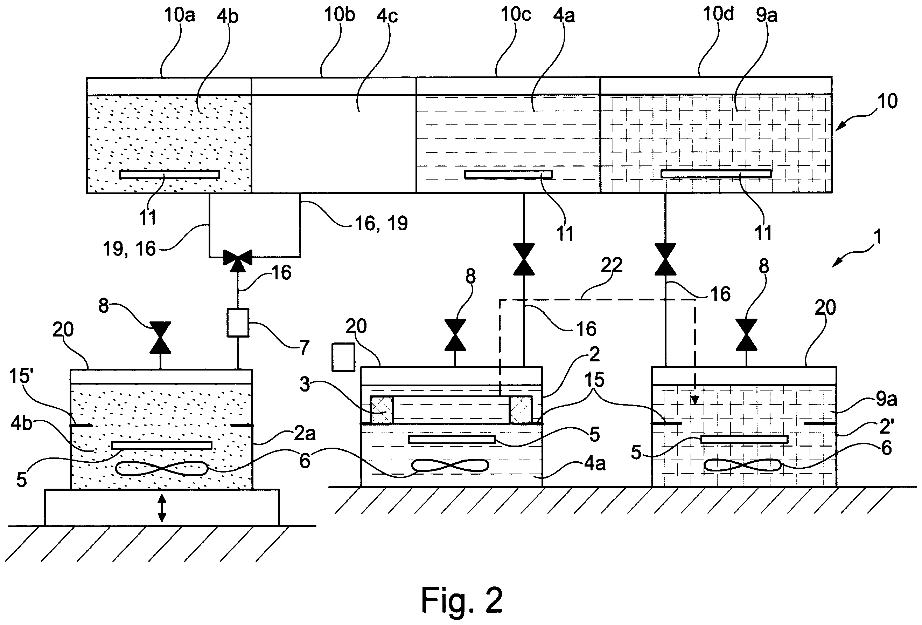

Gemäß Figur 2 erfolgt nun ein Brünieren des entfetteten, vorgewärmten Bauteils 3 im ersten Reaktor 2, der hier einem ersten Brünierreaktor entspricht. Im ersten Brünierreaktor wird als ein erstes Hauptmedium 4a eine wässrige Lösung verwendet, das eine Nitrit-Konzentration von wenigstens 80 g/l aufweist. Das ringförmige Bauteil 3 verbleibt insbesondere für maximal 5 Minuten eingetaucht in das erste Hauptmedium 4a, das eine Temperatur im Bereich von 132 bis 137 °C aufweist. Das Nitrit im ersten Hauptmedium 4a ist bevorzugt in Form von Natriumnitrit vorhanden. Eine Nitrat-Konzentration im ersten Hauptmedium 4a liegt dabei maximal bei einem Viertel der vorhandenen Nitrit-Konzentration.

Der erste Reaktor 2 ist mit dem ersten Hauptmedium 4a derart gefüllt, dass das erste Hauptmedium 4a das Bauteil 3 vollständig bedeckt. Nach einer Brünierung des Bauteils 3 im ersten Reaktor 2 erfolgt ein Transport des Bauteils 3 mittels der lediglich schematisch angedeuteten Transporteinrichtung 22 aus dem ersten Reaktor 2 heraus und in den beheizten weitern ersten Reaktor 2' hinein.

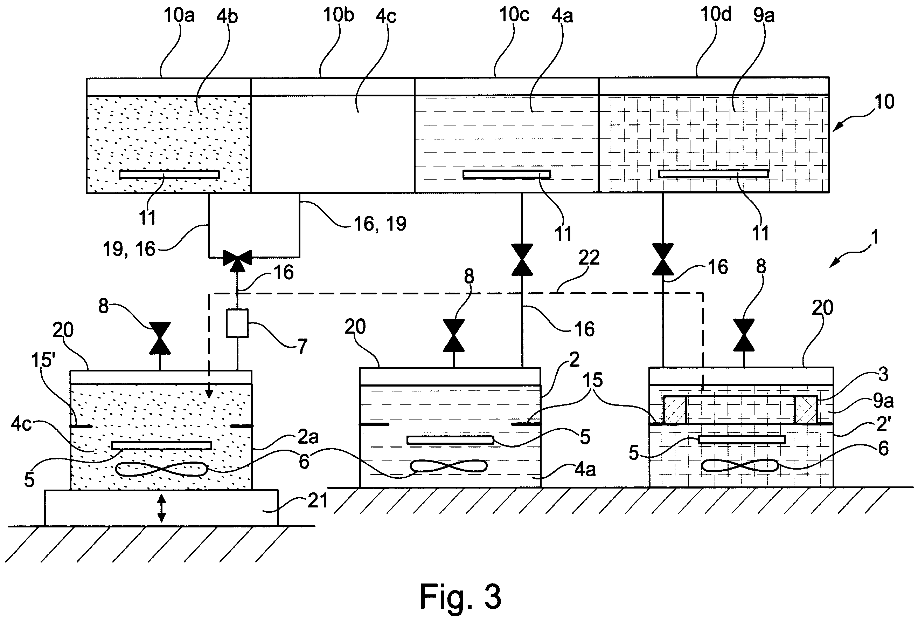

Gemäß Figur 3 erfolgt nun ein weiteres Brünieren des ringförmige Bauteils 3 im weiteren ersten Reaktor 2', der hier einem zweiten Brünierreaktor entspricht. Im zweiten Brünierreaktor wird als ein zweites Hauptmedium 9a eine weitere wässrige Lösung verwendet, das eine höhere Nitrit-Konzentration als das erste Hauptmedium 4a aufweist. Dabei liegt die Nitrit-Konzentration im zweiten Hauptmedium 9a bevorzugt im Bereich von 140 bis 170 g/l. Das ringförmige Bauteil 3 verbleibt insbesondere für wenigstens 12 Minuten eingetaucht in das zweite Hauptmedium 9a, das eine um 3 bis 5 Kelvin höhere Temperatur aufweist als das erste Hilfsmedium 4a. Das Nitrit im zweiten Hauptmedium 9a ist bevorzugt ebenfalls in Form von Natriumnitrit vorhanden.

Der weitere erste Reaktor 2' ist mit dem zweiten Hauptmedium 9a derart gefüllt, dass das zweite Hauptmedium 9a das ringförmige Bauteil 3 vollständig bedeckt. Nach einer vollständigen Brünierung des ringförmigen Bauteils 3 im weiteren ersten Reaktor 2' erfolgt ein Transport des ringförmigen Bauteils 3 mittels der lediglich schematisch angedeuteten Transporteinrichtung 22 aus dem weiteren ersten Reaktor 2' heraus wieder in den beheizten zweiten Reaktor 2a hinein.

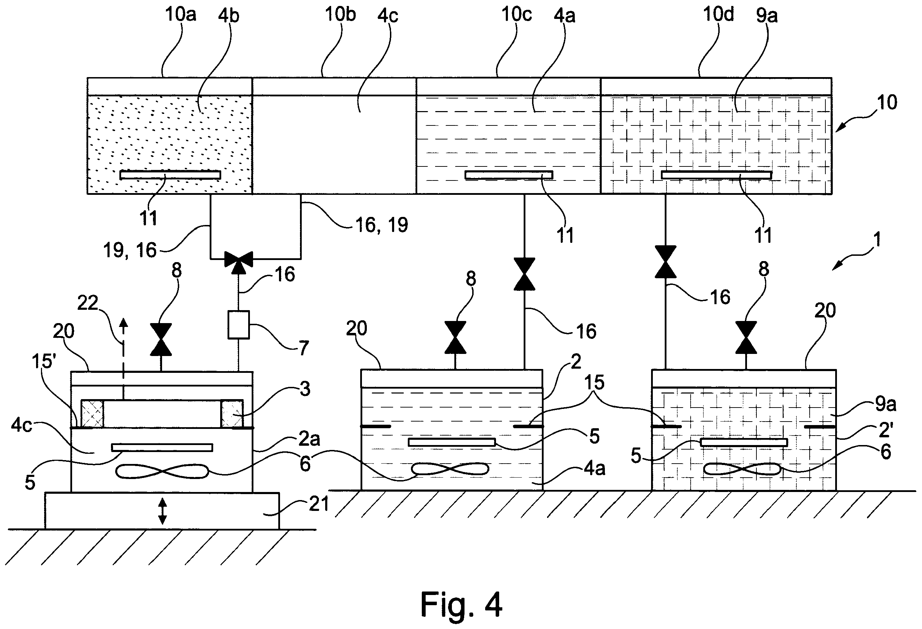

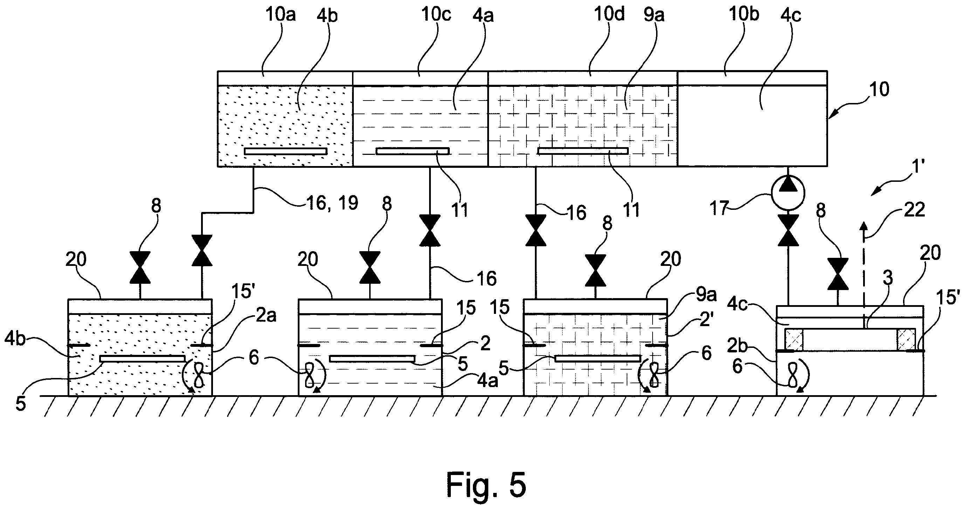

Gemäß Figur 4 erfolgt nun ein Spülen des brünierten Bauteils 3 im zweiten Reaktor 2a. Während der Durchführung des Hauptprozesses wurde der zweite Reaktor 2a mittels der Hebebühne 21 auf ein Niveau oberhalb des externen Behälters 10a angehoben. Über die Auslassleitung 19, den Filter 17 und das Ventil wurde das erste Hilfsmedium 4b mit Hilfe der Schwerkraft zurück in den externen Behälter 10a geleitet. Dabei wurde der zweite Reaktor 2a vollständig entleert. Anschließend wurde das Ventil geschlossen und der zweite Reaktor 2a mittels der Hebebühne 21 wieder auf das in Figur 1 dargestellte Niveau abgesenkt. Alternativ zu einer Hebebühne 21 kann auch eine Fördereinrichtung 17 (vergleiche Figur 5), beispielsweise eine Pumpe, vorgesehen sein, um das erste Hilfsmedium 4b zurück in den externen Behälter 10e zu pumpen.

Dann erfolgte ein Befüllen des zweiten Reaktors 2a mit dem zweiten Hilfsmedium 4c aus dem externen Behälter 10b heraus mit Hilfe der Schwerkraft, wobei das zweite Hilfsmedium 4c hier in Form einer Spüllösung vorliegt.

Das brünierte Bauteil 3 wird mittels der Transporteinrichtung 22 in das zweite Hilfsmedium 4c eingebracht und gespült. Nach dem Spülen wird das ringförmige Bauteil 3 aus dem zweiten Reaktor 2a mittels der Transporteinrichtung 22 fertiggestellt entnommen.

Um das Verfahren für ein weiteres ringförmiges Bauteil erneut zu beginnen, wird die zweite Hilfsmedium 4c zurück in den externen Behälter 10b überführt. Dies kann so erfolgen wie oben für das erste Hilfsmedium 4b bereits beschrieben. Der zweite Reaktor 2a wird erneut mit dem ersten Hilfsmedium 4b befüllt und das Verfahren wie beschrieben für das weitere ringförmige Bauteil wiederholt.

Alternativ kann eine Durchführung des Verfahrens an drei Bauteilen gleichzeitig derart erfolgen, dass nach Überführung eines ersten Bauteils vom zweiten Reaktor 2a in den ersten Reaktor 2 der zweite Reaktor 2a sofort wieder mit einem zweiten Bauteil befüllt wird. Nach Überführen des ersten Bauteils vom ersten Reaktor 2 in den weiteren ersten Reaktor 2' wird das zweite Bauteil in den ersten Reaktor 2 nachgeführt und ein drittes Bauteil in den zweiten Reaktor 2a befüllt. Nach Entnahme des ersten Bauteils aus dem weiteren Reaktor 2' rückt das zweite Bauteil nach. Das dritte Bauteil rückt dann in den ersten Reaktor 2 nach. Erst jetzt erfolgt der Wechsel des Hilfsmediums im zweiten Reaktor 2a und alle drei Bauteile werden nacheinander gespült.

Die Figur 5 zeigt eine schematische Darstellung einer zweiten Reaktorvorrichtung 1' in einer Schnittdarstellung in der Seitenansicht. Gleiche Bezugszeichen wie in den Figuren 1 bis 4 kennzeichnen gleiche Elemente. Im Unterschied zur ersten Reaktorvorrichtung 1 gemäß den Figuren 1 bis 4 ist hier ein weiterer zweiter Reaktor 2b vorgesehen. Dadurch kann der Hilfsprozess des Spülens örtlich abgetrennt vom Hilfsprozess des Entfettens erfolgen. Dabei wird das Verfahren analog durchgeführt wie oben zu den Figuren 1 bis 3 beschrieben. Die Prozesszeit wird durch den zusätzlichen zweiten Reaktor 2b noch verkürzt. Im Unterschied zum in Figur 4 beschriebenen Verfahren wird allerdings das ringförmige Bauteil 3 nach dem Herausnehmen aus dem weiteren ersten Reaktor 2' hier in den weiteren zweiten Reaktor 2b eingebracht und mittels eines zweiten Hilfsmediums 4c in Form einer Spüllösung gespült. Das fertiggestellte, brünierte Bauteil 3 wird mittels einer Transporteinrichtung 22 nach dem Spülen aus dem weiteren zweiten Reaktor 2b entnommen. Die Spüllösung ist hier Wasser, das über eine Fördereinrichtung 17 in den externen Behälter 10b gepumpt werden kann und über einen nicht dargestellten Reinigungskreislauf, der an den externen Behälter 10b angeschlossen ist, gereinigt werden kann. Die Rührvorrichtungen 8 sind hier seitlich am jeweiligen Reaktor vorgesehen, um eine gerichtete Strömung des Mediums im Reaktor zu erreichen. Dabei würde hier in der Draufsicht auf einen Reaktor eine Kreisströmung eingestellt werden. Werden die Rührvorrichtungen 8 im oberen Bereich des jeweiligen Reaktors angeordnet, kann weiterhin eine Aufwirbelung von sich am Reaktorboden absetzendem Schlamm verhindert werden.

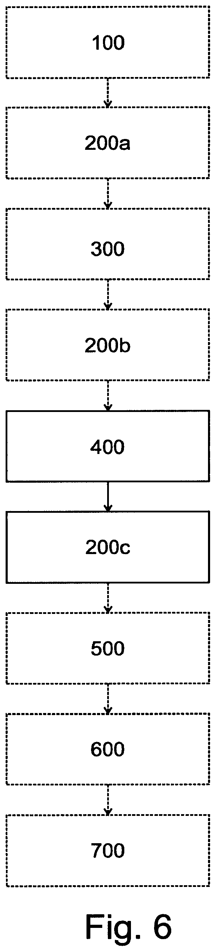

In Figur 6 ist eine mögliche Prozesskette einer Brünierung in einem Flussdiagramm dargestellt. Die einzelnen Schritte der Prozesskette werden in der nachfolgend dargestellten Reihenfolge durchgeführt:
Die Prozesskette weist einen Hilfsprozess 100 auf. Der Hilfsprozess 100 ist als ein Reinigen ausgebildet. Das Hilfsmedium des Hilfsprozesses 100 ist als ein Reinigungsmittel ausgebildet und reinigt das Bauteil 3 von Unreinheiten. Alternativ und/oder ergänzend weist das Hilfsmedium des Hilfsprozesses 100, wie beispielsweise ein erstes Hilfsmedium 4b gemäß den Figuren 1 bis 4, ein Entfettungsmittel auf und reinigt das Bauteil 3 von Fettrückständen. Im Speziellen ist das Hilfsmedium dazu ausgebildet, Unebenheiten und/oder Schrammen auf der Oberfläche des Bauteils 3 durch beispielsweise Ätzung der Oberfläche des Bauteils 3 zu entfernen.

Die Prozesskette gemäß Figur 6 weist einen weiteren Hilfsprozess 200a auf. Der weitere Hilfsprozess 200a ist als ein erstes Spülen ausgebildet. Das Hilfsmedium des Hilfsprozesses 200a ist als ein erstes Spülmittel ausgebildet. Das erste Spülmittel des Hilfsprozesses 200a spült das Bauteil 3 und entfernt Reste des Hilfsmediums des vorgelagerten Hilfsprozesses 100.

Die Prozesskette gemäß Figur 6 weist noch einen weiteren Hilfsprozess 300 auf. Der Hilfsprozess 300 ist als ein Aktivieren ausgebildet. Das Hilfsmedium des Hilfsprozesses 300 ist als ein Aktivierungsmedium ausgebildet. Das Aktivierungsmedium des Hilfsprozesses 300 aktiviert das Bauteil 3. Im Speziellen wirkt das Aktivierungsmedium als ein Katalysator für die Brünierung. Alternativ und/oder ergänzend kann das Hilfsmedium des Hilfsprozesses 300 als ein Konditionierungsmedium ausgebildet sein, wodurch die im Hauptprozess gewünschte chemische Reaktion begünstigt wird.

Die Prozesskette weist gemäß Figur 6 einen weiteren Hilfsprozess 200b auf. Der Hilfsprozess 200b ist als ein zweites Spülen ausgebildet. Das Hilfsmedium des Hilfsprozesses 200b ist als ein zweites Spülmittel ausgebildet. Das zweite Spülmittel des Hilfsprozesses 200b spült das Bauteil 3 und entfernt Reste des Hilfsmediums des vorgelagerten Hilfsprozesses 300.

Die Prozesskette gemäß Figur 6 weist anschließend den Hauptprozess 400 auf. Der Hauptprozess 400 ist als ein Brünieren ausgebildet. Die Hauptmedium des Hauptprozesses 400 sind, wie oben beschrieben, das erste Hauptmedium 4a und das zweite Hauptmedium 9a, die als Brüniermittel ausgebildet sind.

Die Prozesskette weist gemäß Figur 6 nun einen weiteren Hilfsprozess 200c auf. Der Hilfsprozess 200c ist als ein drittes Spülen ausgebildet. Das Hilfsmedium des Hilfsprozesses 200c ist als ein drittes Spülmittel ausgebildet. Das dritte Spülmittel des Hilfsprozesses 200c spült das Bauteil 3 und entfernt Reste des ersten Hauptmediums 4a und des zweiten Hauptmediums 9a des vorgelagerten Hauptprozesses 400.

Die Prozesskette gemäß Figur 6 weist einen weiteren Hilfsprozess 500 auf. Der Hilfsprozess 500 ist als eine Entwässerung ausgebildet. Das Hilfsmedium des Hilfsprozesses 500 ist als ein Entwässerungsmedium ausgebildet. Das Entwässerungsmedium des Hilfsprozesses 500 entfernt Wasserreste aus vorangegangenen Prozessen, insbesondere des Hilfsprozesses 200c, des dritten Spülens, von der Oberfläche des ringförmigen Bauteils 3.

Die Prozesskette gemäß Figur 6 weist einen weiteren Hilfsprozess 600 auf. Der Hilfsprozess 600 ist als ein Ölen ausgebildet. Das Hilfsmedium des Hilfsprozesses 600 ist ein Öl. Das Öl des Hilfsprozesses 600 ölt die Oberfläche des Bauteils 3 und sorgt damit für einen Schutz vor Korrosion des brünierten Bauteils 3.

Alternativ kann der Hilfsprozess 500 und der Hilfsprozess 600 in einem Hilfsprozess zusammengefasst werden. Hierbei ist das Öl derart ausgebildet, dass es eine entwässernde Wirkung aufweist und damit Wasserreste von der Oberfläche des Bauteils 3 entfernt und die Oberfläche des Bauteils 3 ölt.

Abschließend ist ein Trockenvorgang 700 für das Bauteil 3 vorgesehen.

Es sind hier aber auch andere Prozessketten möglich, wobei ein oder mehrere der Hilfsprozesse weggelassen werden können. Weiterhin können in einem Reaktor gleichzeitig mehrere Bauteile behandelt werden.

### Bezugszeichenliste

- 1, 1': Reaktorvorrichtung
- 2, 2': erster Reaktor
- 2a, 2b: zweiter Reaktor
- 3: ringförmiges Bauteil
- 4a, 9a: Hauptmedium
- 4b: erstes Hilfsmedium
- 4c: zweites Hilfsmedium
- 5: Heizelement
- 6: Rührvorrichtung
- 7: Filter
- 8: Überdruckventil
- 10: Behälteranordnung
- 10a - 10d: externer Behälter
- 11: Vorheizelement
- 15, 15': Aufnahmeeinrichtung
- 16: Zuführleitung
- 17: Fördereinrichtung
- 19: Auslassleitung
- 20: Deckel
- 21: Hebebühne
- 22: Transporteinrichtung
- 100, 200a, 200b, 300, 500, 600: Hilfsprozess
- 400: Hauptprozess
- 700: Trocknungsprozess

## Patentansprüche

1. Verfahren zur Oberflächenmodifikation mindestens eines ringförmigen Bauteils (3), das einen Durchmesser oder Abmessungen im Bereich von 0,5 m bis 12 m aufweist,
wobei in mindestens einem ersten Reaktor (2, 2') mindestens ein Hauptprozess (400) durchgeführt wird und in mindestens einem zweiten Reaktor (2a, 2b) mindestens ein Hilfsprozess (100) durchgeführt wird,
wobei das mindestens eine ringförmige Bauteil (3) in den mindestens einen, mit mindestens einem Hauptmedium (4a, 9a) gefüllten ersten Reaktor (2, 2') eingebracht wird, so dass der mindestens eine erste Reaktor (2, 2') mit dem mindestens einen ringförmigen Bauteil (3) bestückt ist,
wobei in dem mindestens einen Hauptprozess (400) das mindestens eine ringförmige Bauteil (3) in dem mindestens einen Hauptmedium (4a, 9a) gebadet wird, wobei durch das mindestens eine Hauptmedium (4a, 9a) eine chemische Änderung der Oberfläche des ringförmigen Bauteils (3) erfolgt,
wobei das mindestens eine ringförmige Bauteil (3) in den mindestens einen, mit mindestens einem Hilfsmedium (4b, 4c) gefüllten zweiten Reaktor (2a, 2b) eingebracht wird, so dass der mindestens eine zweite Reaktor (2a, 2b) mit dem mindestens einen ringförmigen Bauteil (3) bestückt ist,
wobei in dem mindestens einen Hilfsprozess (100) das mindestens eine ringförmige Bauteil (3) in dem Hilfsmedium (4b, 4c) gebadet wird, wobei durch das Hilfsmedium (4b, 4c) eine Behandlung der Oberfläche des mindestens einen ringförmigen Bauteils (3) erfolgt,
wobei Reaktoren (2, 2'; 2a, 2b) eingesetzt werden, die in der Draufsicht einen ringförmigen Querschnitt aufweisen, und
wobei die Oberflächenmodifikation in Form einer Brünierung oder einer Phosphatierung erfolgt, wobei eine Konversionsbeschichtung ausgebildet wird.

2. Verfahren nach Anspruch 1, wobei der mindestens eine erste Reaktor (2, 2') und/oder der mindestens eine zweite Reaktor (2a, 2b) nach dem Einbringen des mindestens einen ringförmigen Bauteils (3) bis zum Ende einer Behandlungsdauer verschlossen wird.

3. Verfahren nach einem der Ansprüche 1 oder 2, wobei das mindestens eine ringförmige Bauteil (3) in einen zweiten Hilfsreaktor (2a) in Form eines Entfettungsreaktors eingebracht und mittels eines ersten Hilfsmittels (4b) entfettet wird,
anschließend das mindestens eine entfettete Bauteil (3) in einen weiteren zweiten Hilfsreaktor (2b) in Form eines Spül- oder Bekeimungsreaktors eingebracht und mittels mindestens eines weiteren Hilfsmittels (4c) behandelt wird,
dann das mindestens eine behandelte Bauteil (3) in einen ersten Reaktor (2) in Form eines ersten Brünier- oder Phosphatierreaktors eingebracht wird und optional
anschließend das mindestens eine Bauteil (3) in einen weiteren ersten Reaktor (2') in Form eines zweiten Brünier- oder Phosphatierreaktors eingebracht wird.

4. Verfahren nach Anspruch 3, **dadurch gekennzeichnet, dass** das mindestens eine weitere Hilfsmedium (4c) aus einem externen Behälter (10a-10d) in den mindestens einen zweiten Reaktor (2a, 2b) gefüllt und nach der Behandlung des Bauteils (3) wieder in den externen Behälter (10a-10d) zurückgeführt wird.

5. Verfahren nach einem der vorhergehenden Ansprüche, wobei das mindestens eine Hauptmedium (4a, 9a) während des mindestens einen Hauptprozesses (400) erhitzt wird.

6. Verfahren nach einem der vorhergehenden Ansprüche, **dadurch gekennzeichnet, dass** als ringförmiges Bauteil (3) eine Komponente eines Wälzlagers, insbesondere in Form eines Lagerringes, behandelt wird.

7. Reaktorvorrichtung (1) zur Durchführung eines Verfahrens nach einem der vorhergehenden Ansprüche,
- mit mindestens einem beheizten ersten Reaktor (2, 2'), wobei der mindestens eine erste Reaktor (2, 2') mindestens eine Aufnahmeeinrichtung (15) zur Aufnahme des mindestens einen ringförmigen Bauteils (3) aufweist,
- mit mindestens einem zweiten Reaktor (2a, 2b), wobei der mindestens eine zweite Reaktor (2a, 2b) mindestens eine weitere Aufnahmeeinrichtung (15') zur Aufnahme des mindestens einen ringförmigen Bauteils (3) aufweist, und
- mit mindestens einer Transporteinrichtung (22) zum Einbringen des mindestens einen ringförmigen Bauteils (3) in einen und/oder zum Entnehmen des mindestens einen ringförmigen Bauteils (3) aus einem ersten Reaktor (2, 2') oder zweiten Reaktor (2a, 2b), wobei die Reaktoren (2, 2'; 2a, 2b) in der Draufsicht einen ringförmigen Querschnitt aufweisen.

8. Reaktorvorrichtung (1) nach Anspruch 7, wobei mehrere erste Reaktoren (2, 2') und mehrere zweite Reaktoren (2a, 2b) vorhanden sind.

9. Reaktorvorrichtung (1) nach Anspruch 8, wobei zwei erste Reaktoren (2, 2') und zwei zweite Reaktoren (2a, 2b) vorhanden sind.

10. Reaktorvorrichtung (1) nach einem der Ansprüche 7 oder 8, wobei mindestens einer der zweiten Reaktoren (2a, 2b) beheizt ist.

11. Reaktorvorrichtung (1) nach einem der der Ansprüche 7 bis 10, wobei weiterhin eine Anzahl n an externen Behältern (10a - 10d) zur Vorhaltung des mindestens einen Hauptmediums (4a, 9a) und des mindestens einen Hilfsmediums (4b, 4c) vorhanden ist und wobei mindestens eine Anzahl m an Reaktoren (2, 2', 2a, 2b) vorhanden ist, wobei n ≥ m gilt.

## Claims

1. A method for the surface modification of at least one annular component (3) which has a diameter or dimensions in the range of from 0.5 m to 12 m,
wherein at least one main process (400) is carried out in at least one first reactor (2, 2') and at least one auxiliary process (100) is carried out in at least one second reactor (2a, 2b),
wherein the at least one annular component (3) is introduced into the at least one first reactor (2, 2') filled with at least one main medium (4a, 9a) so that the at least one first reactor (2, 2') is loaded with the at least one annular component (3),
wherein, in the at least one main process (400), the at least one annular component (3) is bathed in the at least one main medium (4a, 9a), wherein a chemical change in the surface of the annular component (3) occurs by means of the at least one main medium (4a, 9a),
wherein the at least one annular component (3) is introduced into the at least one second reactor (2a, 2b) filled with at least one auxiliary medium (4b, 4c) so that the at least one second reactor (2a, 2b) is loaded with the at least one annular component (3),
wherein, in the at least one auxiliary process (100), the at least one annular component (3) is bathed in the auxiliary medium (4b, 4c), wherein the surface of the at least one annular component (3) is treated by the auxiliary medium (4b, 4c),
wherein reactors (2, 2'; 2a, 2b) are used which have an annular cross section in plan view, and
wherein the surface modification takes place in the form of bluing or phosphating, wherein a conversion coating is formed.

2. The method according to claim 1, wherein the at least one first reactor (2, 2') and/or the at least one second reactor (2a, 2b) is closed after the introduction of the at least one annular component (3) until the end of a treatment period.

3. The method according to any one of claims 1 or 2, wherein the at least one annular component (3) is introduced into a second auxiliary reactor (2a) in the form of a degreasing reactor and is degreased by means of a first auxiliary means (4b),
the at least one degreased component (3) is then introduced into a further, second auxiliary reactor (2b) in the form of a rinsing or seeding reactor and treated by means of at least one further auxiliary means (4c),
the at least one treated component (3) is then introduced into a first reactor (2) in the form of a first bluing or phosphating reactor, and, optionally,
the at least one component (3) is then introduced into a further first reactor (2') in the form of a second bluing or phosphating reactor.

4. The method according to claim 3, **characterised in that** the at least one further auxiliary medium (4c) is filled from an external container (10a-10d) into the at least one second reactor (2a, 2b) and returned again into the external container (10a-10d) after the treatment of the component (3).

5. The method according to any one of the preceding claims, wherein the at least one main medium (4a, 9a) is heated during the at least one main process (400).

6. The method according to any one of the preceding claims, **characterised in that** a component of a roller bearing, in particular in the form of a bearing ring, is treated as the annular component (3).

7. A reactor device (1) for carrying out a method according to any one of the preceding claims,
- having at least one heated first reactor (2, 2'), wherein the at least one first reactor (2, 2') has at least one receiving apparatus (15) for receiving the at least one annular component (3),
- having at least one second reactor (2a, 2b), wherein the at least one second reactor (2a, 2b) has at least one further receiving apparatus (15) for receiving the at least one annular component (3), and
- having at least one transport apparatus (22) for introducing the at least one annular component (3) into and/or for removing the at least one annular component (3) from a first reactor (2, 2') or second reactor (2a, 2b), wherein the reactors (2, 2'; 2a, 2b) have an annular cross section in plan view.

8. The reactor device (1) according to claim 7, wherein there are multiple first reactors (2, 2') and multiple second reactors (2a, 2b).

9. The reactor device (1) according to claim 8, wherein there are two first reactors (2, 2') and two second reactors (2a, 2b).

10. The reactor device (1) according to any one of claims 7 or 8, wherein at least one of the second reactors (2a, 2b) is heated.

11. The reactor device (1) according to any one of claims 7 to 10, wherein there are also a number n of external containers (10a-10d) for providing the at least one main medium (4a, 9a) and the at least one auxiliary medium (4b, 4c), and wherein there is at least a number m of reactors (2, 2', 2a, 2b), wherein n ≥ m.

## Revendications

1. Procédé pour la modification de surface d'au moins une pièce annulaire (3) qui présente un diamètre ou des dimensions dans la plage de 0,5 m à 12 m,
au moins un processus principal (400) étant réalisé dans au moins un premier réacteur (2, 2') et au moins un processus auxiliaire (100) étant réalisé dans au moins un second réacteur (2a, 2b),
l'au moins une pièce annulaire (3) étant introduite dans l'au moins un premier réacteur (2, 2') rempli d'au moins un milieu principal (4a, 9a), de façon que l'au moins un premier réacteur (2, 2') soit équipé de l'au moins une pièce annulaire (3),
dans l'au moins un processus principal (400), l'au moins une pièce annulaire (3) baignant dans l'au moins un milieu principal (4a, 9a), l'au moins un milieu principal (4a, 9a) provoquant une modification chimique de la surface de la pièce annulaire (3),
l'au moins une pièce annulaire (3) étant introduite dans l'au moins un second réacteur (2a, 2b) rempli d'au moins un milieu auxiliaire (4b, 4c), de façon que l'au moins un second réacteur (2a, 2b) soit équipé de l'au moins une pièce annulaire (3),
dans l'au moins un processus auxiliaire (100), l'au moins une pièce annulaire (3) baignant dans le milieu auxiliaire (4b, 4c), la surface de l'au moins une pièce annulaire (3) étant traitée par le milieu auxiliaire (4b, 4c),
les réacteurs (2, 2' ; 2a, 2b) étant utilisés, lesquels présentent une section transversale annulaire en vue de dessus et
la modification de la surface s'effectuant sous la forme d'un brunissage ou d'une phosphatation, avec formation d'un revêtement de conversion.

2. Procédé selon la revendication 1, dans lequel l'au moins un premier réacteur (2, 2') et/ou l'au moins un second réacteur (2a, 2b) est fermé après l'introduction de l'au moins une pièce annulaire (3) jusqu'à la fin d'une période de traitement.

3. Procédé selon l'une quelconque des revendications 1 ou 2, dans lequel l'au moins une pièce annulaire (3) est introduite dans un second réacteur auxiliaire (2a) sous la forme d'un réacteur de dégraissage et est dégraissée au moyen d'un premier milieu auxiliaire (4b),
puis l'au moins une pièce dégraissée (3) est introduite dans un autre second réacteur auxiliaire (2b) sous la forme d'un réacteur de rinçage ou de germination et traitée au moyen d'au moins un autre milieu auxiliaire (4c),
puis l'au moins une pièce traitée (3) est introduite dans un premier réacteur (2) sous la forme d'un premier réacteur de brunissage ou de phosphatation et éventuellement
puis l'au moins une pièce (3) est introduite dans un autre premier réacteur (2') sous la forme d'un second réacteur de brunissage ou de phosphatation.

4. Procédé selon la revendication 3, **caractérisé en ce que** l'au moins un autre milieu auxiliaire (4c) est chargé depuis un récipient externe (10a-10d) dans l'au moins un second réacteur (2a, 2b) et, après le traitement de la pièce (3), renvoyé dans le récipient externe (10a-10d).

5. Procédé selon l'une quelconque des revendications précédentes, dans lequel l'au moins un milieu principal (4a, 9a) est chauffé pendant l'au moins un processus principal (400).

6. Procédé selon l'une quelconque des revendications précédentes, **caractérisé en ce qu'**une pièce d'un palier à roulement, en particulier sous la forme d'une bague de roulement, est traitée en guise de pièce annulaire (3).

7. Dispositif réacteur (1) pour la réalisation d'un procédé selon l'une quelconque des revendications précédentes,
- comprenant au moins un premier réacteur (2, 2') chauffé, l'au moins un premier réacteur (2, 2') présentant au moins un dispositif de réception (15) pour recevoir l'au moins une pièce annulaire (3),
- comprenant au moins un second réacteur (2a, 2b), l'au moins un second réacteur (2a, 2b) présentant au moins un autre dispositif de réception (15') pour recevoir l'au moins une pièce annulaire (3) et
- comprenant au moins un dispositif de transport (22) pour introduire l'au moins une pièce annulaire (3) dans et/ou pour retirer l'au moins une pièce annulaire (3) d'un premier réacteur (2, 2') ou d'un second réacteur (2a, 2b), les réacteurs (2, 2' ; 2a, 2b) présentant une section transversale annulaire en vue de dessus.

8. Dispositif réacteur (1) selon la revendication 7, dans lequel une pluralité de premiers réacteurs (2, 2') et une pluralité de seconds réacteurs (2a, 2b) sont présents.

9. Dispositif réacteur (1) selon la revendication 8, dans lequel deux premiers réacteurs (2, 2') et deux seconds réacteurs (2a, 2b) sont présents.

10. Dispositif réacteur (1) selon l'une quelconque des revendications 7 ou 8, dans lequel au moins un des seconds réacteurs (2a, 2b) est chauffé.

11. Dispositif réacteur (1) selon l'une quelconque des revendications 7 à 10, dans lequel également un nombre n de récipients externes (10a-10d) sont présents pour stocker l'au moins un milieu principal (4a, 9a) et l'au moins un milieu auxiliaire (4b, 4c) et au moins un nombre m de réacteurs (2, 2', 2a, 2b) sont présents, n ≥ m.
